# EUROPEAN PATENT APPLICATION

(11) **EP 1 055 533 A2**
(43) Date of publication of application: **29.11.2000**
(21) Application number: 00304479.9
(22) Date of filing: 25.05.2000
(51) Int. Cl.: B60F 1/04

(54) **Box height adjusting system for intermodal vehicles**

(30) Priority: 26.05.1999 GB 9912221
(71) Applicant: Crossley, Martin Charles, Seaslae, Cumbria CA20 1HQ (GB)
(72) Inventor: Crossley, Martin Charles, Seaslae, Cumbria CA20 1HQ (GB)
(74) Representative: Barker, Rosemary Anne

(57) **Abstract**

In order to allow the wheeled bogies B supporting a container X to be moved out to the front and rear of the container so the latter can be lowered and suspended there between for railway transport, a respective assembly comprising pivotally connected elongate members C and T and a jack device J are mounted at each corner of the container X. The jacks are extended to support the weight of the container while the bogies B are moved out and have their wheels changed from road to railway wheels (H to R). The pivotal connection A of the members C and T is attached to or adjacent the midpoint M of the sides of the bogie B as the latter is moved out, thus causing the member C to swing out and the member T to slide out to new positions suspending the container between the bogies B, as the former is lowered from the jack J.

## Description

This invention relates to a vehicle capable of travelling on both road and railway. It is primarily aimed at freight vehicles but could also be used for passenger vehicles. For freight the following intermodal methods have been used:-
- Transferring an ISO (International Standards Organisation) container or similar box from a lorry trailer to a railway wagon.
- Placing a complete lorry trailer on a railway wagon (piggy back).
- Placing a complete lorry trailer on a pair of specially made or adapted railway bogies..

These three methods usually mean that the taller sizes of container cannot fit the existing railway structure, in particular cannot fit through, tunnels, thus denying the railway potential traffic. Enlarging the structure size would be costly and disruptive to existing traffic.

The object of this invention is to provide means to reduce the height at which an container on an intermodal vehicle is carried on the railway, thereby permitting carriage of taller boxes by rail.

With this object in view the invention provides an intermodal vehicle comprising a container mounted onto front and rear wheeled bogies and height adjustment means enabling the container to be selectively mounted above the bogies or suspended between the bogies, the height adjustment means comprising four assemblies, one of which is arranged at or adjacent each corner of the container, each assembly comprising a first elongate member which is pivotally connected to the container at or near the top thereof so as to be swingable forwardly or rearwardly, respectively, from a position closely adjacent an upright container wall, a second elongate member which is slidably mounted at or near the bottom of the container and has a forward or rearward end, respectively, which is pivotally connected to the free end of the first member, the first and/or second member being connectable to the respective bogies at or near their pivotal connection, and a jack member which is secured to the container and is extensible so as to bear the weight of the container while the bogies are moved from positions below the container to positions to the front and rear thereof, where they support the container by way of the respective first and second members.

The height adjustment means according to the invention may be retro fitted to ISO containers or incorporated into specially designed non demountable box trailers. The container, which may be for freight or may be a passenger carriage, is used as part of the vehicle structure to reduce the amount of non payload weight.

The invention will be explained further, by way of example, with reference to the accompanying drawings, which show the sequence of operations involved in lowering the container. In this respect:
Figure 1 is a fragmentary side view of the rear end of an embodiment of the vehicle of the invention, in a raised condition of the container;
Figure 2 is a rear view of the same vehicle as in Figure 1, but with the jack in its load bearing condition;
Figure 3 is a view similar to Figure 1, where the rear bogie is being re-located;
Figure 4 is a view similar to Figure 3 where the rear bogie is in its rearmost position;
Figure 5 is a view similar to Figure 3 in a lowered condition of the container; and
Figure 6 is a fragmentary side view, similar to Figure 5, of the rear end of a modified embodiment
of the vehicle of the invention, in a lowered condition of the container.

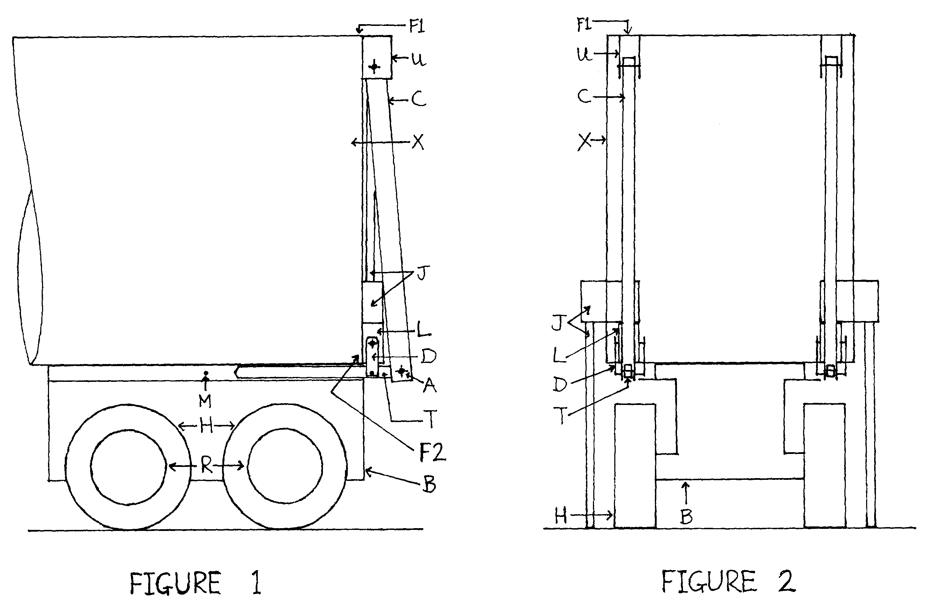

Referring to Figure 1, a container X is shown in its raised position, with two wheeled bogies B (but only one is shown) underneath the container, and the latter frilly supported thereon. Only one end of the vehicle is shown because the other end, i.e the front end, corresponds.

A container height adjustment system comprises four assemblies, one at each corner of the container X. Only one such assembly is shown in the drawings. Each assembly comprises an upper elongate member C, a lower elongate member T and a jack device J.

The member C is pivoted to a bracket U which is mounted at the top corner of the container, e.g by an ISO twistlock fitting F1. The member C is swingable in a plane which corresponds to the plane of the container side walls. The member T is slidably mounted below and closely adjacent the floor of the container X by way of a droplink D which pivots in a bracket L, which in turn is attached to the container e.g by an ISO twistlock fitting F2. The member T may be slidable in a slot formed in the top margin of the respective side edge of the bogie B. The members T and C converge pivotally at apex A. The jack device is fixedly attached to the container X by the same bracket L. It is shown in Fig. 1 in its fully retracted condition.

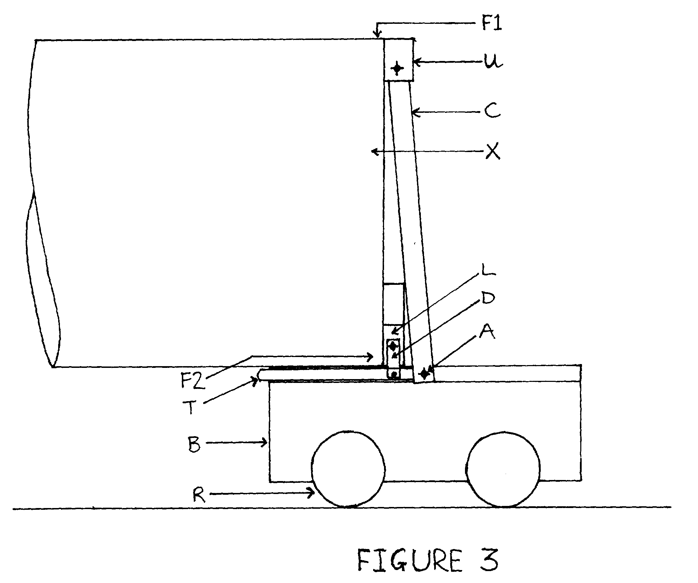

In order to lower the container X, as shown in Figs. 2 to 5 in sequence, the jack J is extended to the ground so that it takes the weight of the container X off the bogies B without lifting the bogies off the ground. This allows the bogies B to be moved from under the container, as shown in Fig. 3, although the jack device J has been omitted from Figure 3 for reasons of clarity. The jacks J are operated by commercially available electric drives e.g by ball screw or by rack and pinion mechanisms.

A mechanism (not shown) for exchanging the road and railway wheels on each bogie B is integral with the respective jack devices J. This mechanism is probably based on a SCARA type robot arm in a pick and place type application. In the drawings, small circles R represent the railway wheels and large circles H represent the road (highway) wheels.

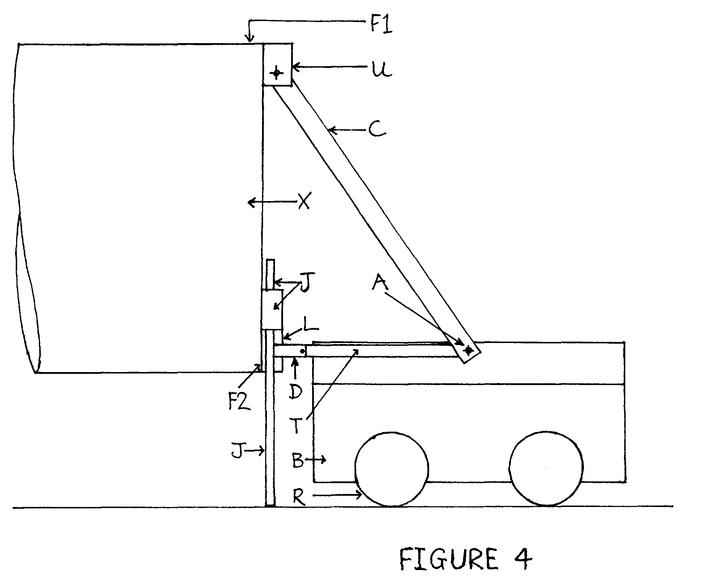

Figures 3 and 4 show the sequence of operation continuing, whereby the bogies B with the railway wheels R now fitted have motored part way and then fully from under the container X. As this takes place, the mid point M of the top of the bogie frame is attached at each side, either manually or by an automatic mechanism to the pivot points A of the respective pairs of front or rear beam members C, T. As the mid point M of the bogie B passes out from under the container and continues to move away from the container X, the member T by virtue of its attachment at pivot point A is pulled from under the container X as far as it can go. Its inner end then contacts the drop link D, causing the latter to rotate and align itself with the axis of the member T. A wedge on the bracket, L jams the drop link D and the member T in this alignment.

Meanwhile the member C, because of is attachment to the bogie at A is caused to swing away from the container X as shown in fig. 4. In this respect, the member C is telescopically extensible in length e.g by screw joints, and automatically extends as it is swung out. However, it should be noted that when the bogie has moved out fully and is no longer loaded with the weight of the container X its suspension will rise, along with the position of pivot point A.

The bogie B is motored out using an electric motor in the bogie frame driving via the wheels R.

The drop link D and the member T may be wedged using an electromechanical relay or servo type mechanism mounted on the drop link D.

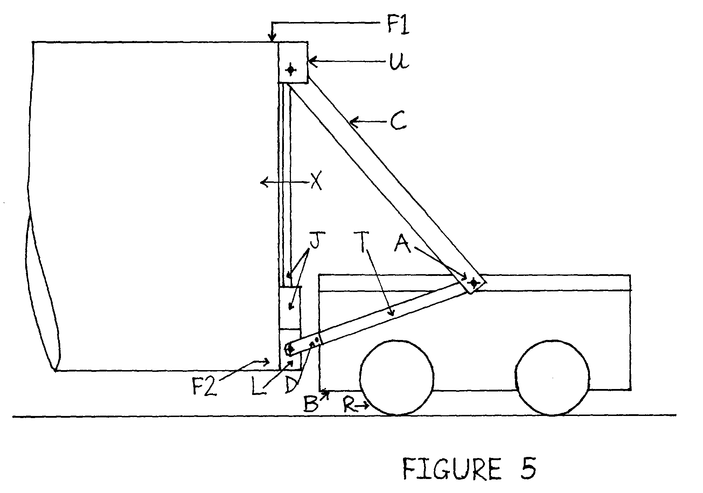

Continuing the sequence from Fig. 4 to Fig. 5, the jack J slowly shortens, thereby lowering the container X and altering the geometry of the members C and T relative thereto.. Figure 5 shows the container X in a lowered position suitable for haulage on the railway network, with jacks J fully retracted and the weight on if the container X borne by the bogies B, so the suspension thereof has lowered again.

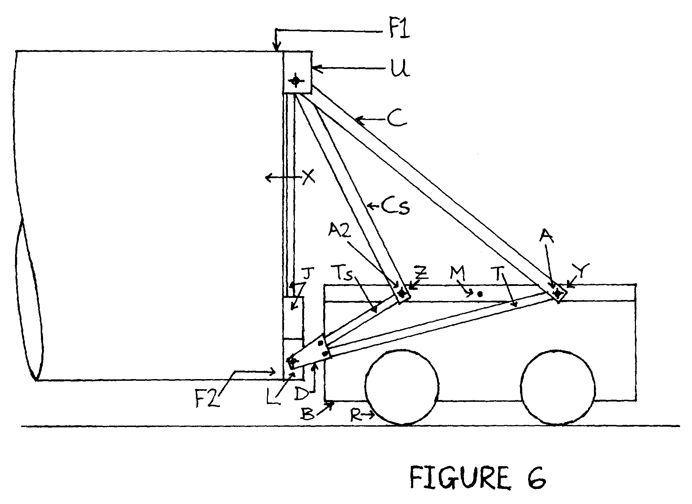

The foregoing is illustrative and not imitative of the scope of the invention. Many variations in detail are possible. In particular, it may be found desirable to have the bogies B mounted more rigidly relative to the container X, when they are out at the front and rear and are being used to suspend the container X in a lowered position. To achieve this, subsidiary, shorter elongate members Cs and Ts may be pivotally connected to the main members C and T as shown in the embodiment of Figure 6. In this case the pivotal connection A of the members C and T may be connectable to the bogie in front of its mid point M at point Y, and the subsidiary members Cs and Ts may be swung out so that their respective free ends A2 are connectable to the bogie B behind its mid point M at point Z. In another embodiment (not illustrated), perhaps only the member C need have such a subsidiary pivotal arm.

## Claims

1. An intermodal vehicle comprising a container mounted onto front and rear wheeled bogies and height adjustment means enabling the container to be selectively mounted above the bogies or suspended between the bogies, the height adjustment means comprising four assemblies, one of which is arranged at or adjacent each corner of the container, each assembly comprising a first elongate member which is pivotally connected to the container at or near the top thereof so as to be swingable forwardly or rearwardly, respectively, from a position closely adjacent an upright container wall, a second elongate member which is slidably mounted at or near the bottom of the container and has a forward or rearward end, respectively which is pivotally connected to the free end of the first member, the first and/or second member being connectable to the respective bogie at or near their pivotal connection, and a jack member which is secured to the container and is extensible so as to bear the weight of the container while the bogies are moved from positions below the container to positions to the front and rear thereof where they support the container by way of the respective first and second members.
